# EUROPEAN PATENT APPLICATION

(11) **EP 4 389 485 A1**
(43) Date of publication of application: **26.06.2024**
(21) Application number: 22857460.4
(22) Date of filing: 06.07.2022
(51) Int. Cl.: B60K 17/04, B60K 17/08, B60K 17/28

(54) **TRANSMISSION SYSTEM**

(30) Priority: 17.08.2021 CN 202110939850
(71) Applicant: Ma, Liang, Yangquan, Shanxi 045000 (CN)
(72) Inventor: Ma, Liang, Yangquan, Shanxi 045000 (CN)
(74) Representative: Cabinet Chaillot
(86) International application number: PCT/CN2022/104147
(87) International publication number: WO 2023/020147

(57) **Abstract**

The invention discloses a transmission system, which is applied to a non-independent suspension or an independent suspension of a kart body. The transmission system comprises a transmission box body and transmission wheel in the transmission box body. The transmission box body is a gear transmission box body, a sprocket and chain transmission box body, a bridge gear transmission box body or a bridge sprocket and chain transmission box body. The transmission wheel is a transmission gear or a sprocket and chain. The present invention has the following advantages: in the present invention, the power outputted from an engine can be efficiently transmitted to a drive axle, so that a vehicle can better adapt to travel on an off-road surface, and the vehicle obtains a more stable driving force; in addition, the engine is mounted separate from the drive axle, and the engine is mounted on the frame, thereby reducing the unsprung mass of the drive axle and improving the comfort of the driver and passengers.

## Description

### 1. Technical Field

The invention relates to the technical field of kart, specifically relating to a transmission system.

### 2. Background Art

Existing all-terrain kart is the rear drive axle which installs the engine and rear suspension into an integral structure, but this drive axle can not be well adapted to off-road conditions, but also can not take into account the comfort of the driver and passenger, which is owing to the short size of such vehicle, so the mounting position of engine is very limited; most models have the engine and the rear suspension designed and mounted as a drive axle in the form of integral structure, the rear suspension swing arm is a rigid structure; the hard drive shaft is mounted under the swing arm and engine is mounted on the swing arm; the engine, the rear suspension swing arm and the hard drive shaft are mounted into a rigid rear drive axle with single swing arm so as to efficiently use the chain to transfer the power from the engine to the drive axle, and efficiently use the damping circlips to minimize the vibration.

However, disadvantages of such a drive axle follows; due to the rear suspension swing arm is in integral rigid structure, the unsprung mass increases greatly and the response performance of the suspension in the undulating road surface decreases greatly, and cannot slow down the impact force from the road surface in time and effectively; since the suspension swing arm is in integral rigid structure, when the suspension fluctuates, it can only do axial motion at two points connected with the frame, the rigid drive axle can not form the working condition of crossed shaft with the front axle, so when the vehicle is traveling on an off-road surface, each wheel has poor patrolling, and there is always one wheel in flight state and is not able to travel close to the road surface in real time and reduces the efficiency of power transmission.

Therefore, it is imperative to design a new type of kart transmission system with excellent performance, high transmission efficiency, and adaptability to off-road driving, as well as ride comfort.

### Summary of the Invention

In order to solve problems in prior art, the invention provides a transmission system, and the invention is realized via the following technical scheme.

A transmission system, which is applied to a non-independent suspension or an independent suspension of a kart body.

The transmission system comprises a transmission box body and transmission wheel in the transmission box body; the transmission box body is a gear transmission box body, a sprocket and chain transmission box body, a bridge gear transmission box body or a bridge sprocket and chain transmission box body; the transmission wheel is a transmission gear or a sprocket and chain.
A power transmission mechanism for all-terrain kart comprising said transmission system, characterized in that it further comprises an engine; said engine is one kind of CVT engine or variable-frequency engine; said transmission system comprises a combination of gear transmission box body and transmission gears in said gear transmission box body;
A non-independent suspension applied to the kart body; said engine is connected with the mounting bracket thereof via flexible spring rubber pad; The top bearing block of said gear transmission box body is arranged on the output shaft of the engine tail end; in said top bearing block of the gear transmission box body is mounted with bearings and transmission gears sleeved to the output shaft spline of engine tail end sequentially, and fastened to the output shaft of engine tail end with another set of bearings by means of nut; the central position of the said gear transmission box body is provided with a plurality of groups of transmission gears sequentially arranged and meshing with each other, each group of transmission gears are fitted with two bearings, a gear and a gear shaft, two bearings of each combination are mounted in the bearing block on two sidewalls of the gear transmission box body, the gear shaft passes through the gears and the bearings and mounts the gears in the middle of two bearings, the gear shaft is fixed in the corresponding bearing holes; bearing, gear, and gear shaft are mounted in the bottom bearing block of the gear transmission box body; said gear shaft is a spline shaft of constant velocity joint, which passes through the bearing holes in the bearing block and combines the gear and the bearing to form a gear transmission combination, and the left and right constant velocity joint heads are mounted on the spline shaft extending outward from the bottom bearing block of the gear transmission box body, which are fastened and connected by center screw;
In said constant velocity joint head outputting power to the left at the bottom bearing block of the gear transmission box body is provided with a constant velocity joint slideway at the right end of the transmission half-shaft, the constant velocity joint slideway of the left end of the transmission half-shaft is embedded, and the constant velocity joint head extending from the right side of gear transmission box body mounted at the left end of the drive axle tube is embedded and connected; said gear transmission box at the left of the drive axle tube is vertically welded to the drive axle tube, and the drive axle gear transmission box body is parallel with the ground. In said constant velocity joint bearing block of the drive axle gear transmission box body are mounted with two bearings, a gear and a gear shaft; said transmission gear is installed in the middle of said two bearings, and the spline shaft of the constant velocity joint passes through the bearing holes in the bearing block to combine the gear with the bearings, and is tightened by circlip in the overhang spline groove of the constant velocity joint bearing block of the drive axle gear transmission box body; in said drive axle gear transmission box body is equipped with three sets of transmission gear combinations sequentially arranged and meshing with each other, including a set of gear combinations within the drive axle tube bearing block of the gear transmission box body on the hard drive shaft, an intermediate gear bearing combination within the drive axle tube welded gear transmission box body, and gear bearing combinations mounted within the constant velocity joint bearing block of the drive axle gear transmission box body;
An independent suspension applied to the kart body, using ram's horn structure suitable for independent suspensions; at the tail end of said transmission half-shaft is provided with a retractable constant velocity joint spline shaft, inserted into the ring flange center spline hole shared with the wheel hub brake discs mounted within the ram's horn bearing block to engage and fastened by nut.
The power transmission mechanism for all-terrain kart comprising said transmission system, characterized in that it further comprises an engine; said engine is one kind of CVT engine or variable-frequency engine; said transmission system comprises a combination of sprocket and chain transmission box body and sprocket and chain in said sprocket and chain transmission box body;
A non-independent suspension applied to the kart body, wherein the top bearing block of said sprocket and chain transmission box body is mounted on the output shaft of said engine tail end; in the bridge gear transmission box body is mounted with bearing, transmission minor sprocket sleeved to the output shaft spline of engine tail end sequentially, and fastened to the output shaft of engine tail end with another set of bearings by means of nut; the central position of two bearings mounted in the top bearing block of said sprocket and chain transmission box body and on the transmission minor sprocket sleeved to the output shaft spline of engine tail end is provided with chains; the central position of two bearings mounted in the bottom bearing block of said sprocket and chain transmission box body is in mesh connection with the minor sprocket sleeved with the constant velocity joint spline shaft; bearing sprocket and sprocket shaft are mounted in the bottom bearing block of said sprocket and chain transmission box body; said sprocket shaft is spline shaft of constant velocity joint, which passes through the bearing hole in the bearing block and combine the sprocket and bearing into the sprocket and chain transmission combination; two constant velocity joints head at left and right are mounted on the overhang spline shaft of the bottom bearing block of the sprocket and chain transmission box and are connect via central screw.

In said constant velocity joint head outputting power to the left at the bottom bearing block of the sprocket and chain transmission box body is provided with a constant velocity joint slideway at the right end of the transmission half-shaft, the constant velocity joint slideway of the left end of the transmission half-shaft extending left is embedded, and the constant velocity joint head extending from the right side of sprocket and chain transmission box body mounted at the left end of the drive axle tube is embedded and connected; said sprocket and chain transmission box at the left of the drive axle tube is vertically welded to the drive axle tube, and the drive axle sprocket and chain transmission box body is parallel with the ground; in said constant velocity joint bearing block of the drive axle sprocket and chain transmission box body are mounted with two bearings, a minor sprocket and a sprocket shaft; said minor sprocket is installed in the middle of said two bearings, and the spline shaft of the constant velocity joint passes through the bearing holes in the bearing block to combine the minor sprocket with the bearings, and is tightened by circlip in the overhang spline groove of the constant velocity joint bearing block of the sprocket and chain transmission box body; mounted two sets of sprocket combination are sleeved with suitable chains to form the power transmission mechanism inside said drive axle sprocket and chain transmission box body.

An independent suspension applied to the kart body, wherein two constant velocity joints are mounted at the left and right sides simultaneously out of the bottom bearing block of the sprocket and chain transmission box body mounted vertically on the output shaft of said engine tail end; the structure of two transmission half-shafts and two ram's horn at left and right is identical with the ram's structure of the transmission system comprising said gear transmission box body and transmission gears inside said gear transmission box body suitable for independent suspension
A power transmission mechanism for all-terrain kart comprising said transmission system applied to the non-independent suspension or independent suspension of the kart body, which is characterized in that it also includes engine; said engine is a kind of upright engine or horizontal engine; said transmission system is a combination of bridge gear transmission box body and gear transmission box body;
The bridge gear transmission box body mounted horizontally on the left output shaft of said engine is closely stuck and fixedly mounted to the box body at the left of the engine output shaft; a triangle support is connected between said bridge gear transmission box body and the engine rear support; a top bearing block of the input shaft of the gear transmission box body is arranged on the right side of the output shaft bearing block at the tail end of the bridge gear transmission box body side by side; the same spline coaxially penetrates into the output shaft bearing block at the tail end of the bridge gear transmission box body and the top bearing block of the input shaft of the gear transmission box body which are coaxial and side by side therewith; the bridge gear transmission box body and the outward extending part of the bearing block of the gear transmission box body are fastened through nuts; three groups of mutually meshed gear bearing combinations are sequentially arranged in the bridge gear transmission box body, comprising the first group of transmission gears, the second group of transition gear bearing combination and the third group of tail end output gear bearing combination;
A power transmission mechanism for all-terrain kart comprising said transmission system applied to the non-independent suspension or independent suspension of the kart body, which is characterized in that: it also includes an engine; said engine is a kind of upright engine or horizontal engine; said transmission system is a combination of bridge sprocket and chain transmission box body and sprocket and chain transmission box body;
Said power transmission mechanism formed by bridge sprocket and chain transmission box body and sprocket and chain transmission box body are identical with the power transmission mechanism formed by said bridge gear transmission box body and the gear transmission box body in appearance shape, installation position structure and application range.

Preferably, in the bottom bearing block or the tail end bearing block of the gear transmission box or the sprocket and chain transmission box body driven by the ram's horn structure applied to the independent suspension, the middle spline shaft in the bearing block, which is connected with the constant velocity joint on the left side and the right side outside the bearing block, can be replaced by differential end gear or the sprocket to ensure that between two half shafts has differential function.

Preferably, the gear transmission box or the sprocket and chain transmission box mounted on the right output shaft of the CVT engine or the variable-frequency engine and top bearing block of the gear transmission box body or the sprocket and chain transmission box body mounted coaxially and side by side with the right side out of the tail end output shaft bearing block of the bridge gear transmission box body or the bridge sprocket and chain transmission box body mounted horizontally on the left output shaft of the upright engine or horizontal engine can be centered around the input shaft thereof, and the working position of the transmission box body can be mounted to a vertical position, a horizontal position or any direction position for power transmission.

The advantageous effects of the invention is as follows: in the present invention, the power outputted from engine can be efficiently transmitted to a drive axle, so that a vehicle can better adapt to travel on an off-road surface, and the vehicle obtains a more stable driving force; in addition, the engine is mounted separate from the drive axle, and the engine is mounted on the frame, thereby reducing the unsprung mass of the drive axle and improving the comfort of the driver and passengers.

### BRIEF DESCRIPTION OF THE DRAWINGS

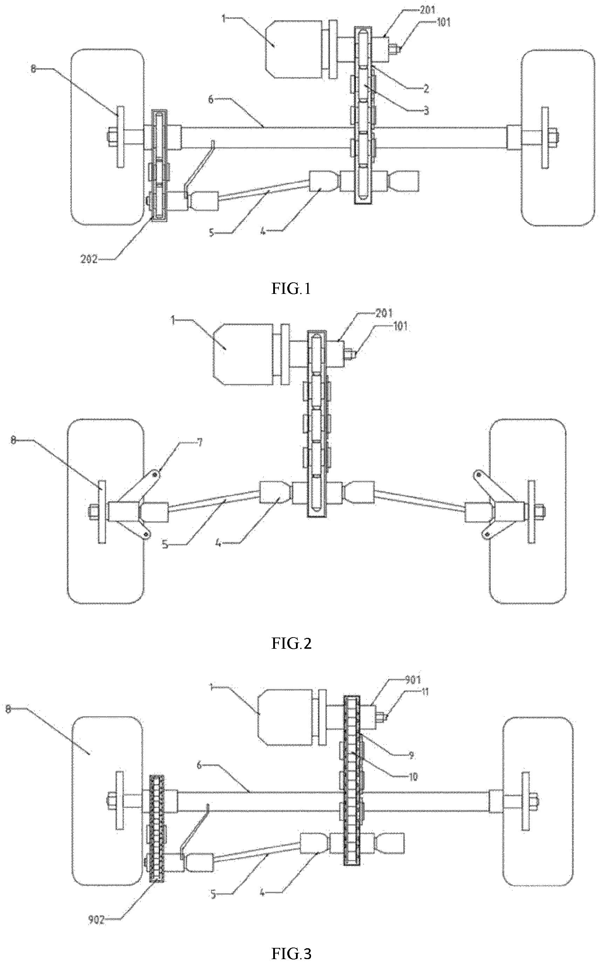

FIG. 1 is the structural diagram of the CVT engine or the variable-frequency engine and the gear transmission box body applied to the non-independent suspension of the kart;
FIG. 2 is the structural diagram of the CVT engine or the variable-frequency engine and the gear transmission box body applied to the independent suspension of the kart;
FIG. 3 is the structural diagram of the CVT engine or the variable-frequency engine and the sprocket and chain transmission box body applied to the non-independent suspension of the kart;
FIG. 4 is the structural diagram of the CVT engine or the variable-frequency engine and the sprocket and chain transmission box body applied to the independent suspension of the kart;
FIG. 5 is the right view illustrating when the CVT engine or the variable-frequency engine cooperates with the gear transmission box and the gear transmission box body on the hard drive axle;

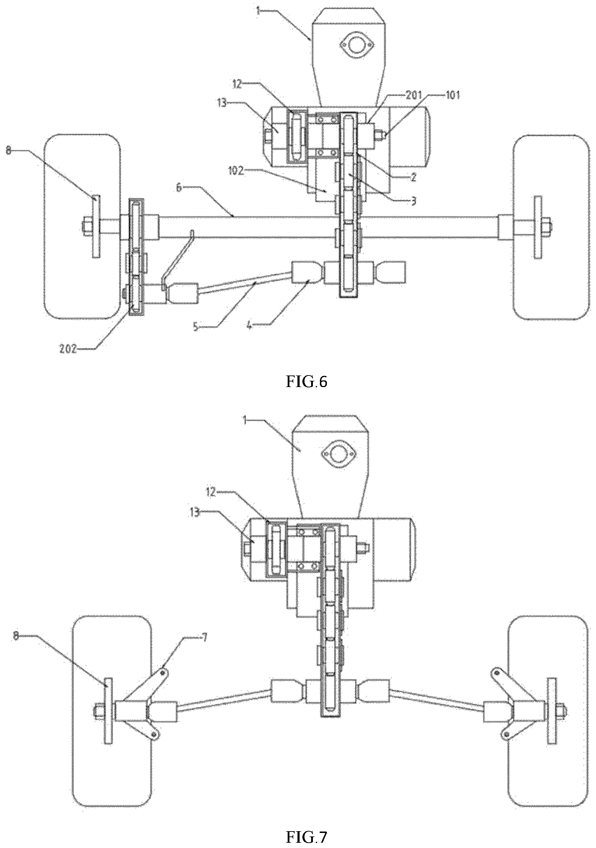

FIG. 6 is the structural diagram of the upright engine or the horizontal engine, the gear transmission box body and the bridge gear transmission box body applied to the non-independent suspension of the kart;
FIG. 7 is the structural diagram of the upright engine or the horizontal engine, the gear transmission box body and the bridge gear transmission box body applied to the independent suspension of the kart;
FIG. 8 is the left view of the overall structural of the upright engine or the horizontal engine, the gear transmission box body and the bridge gear transmission box body;

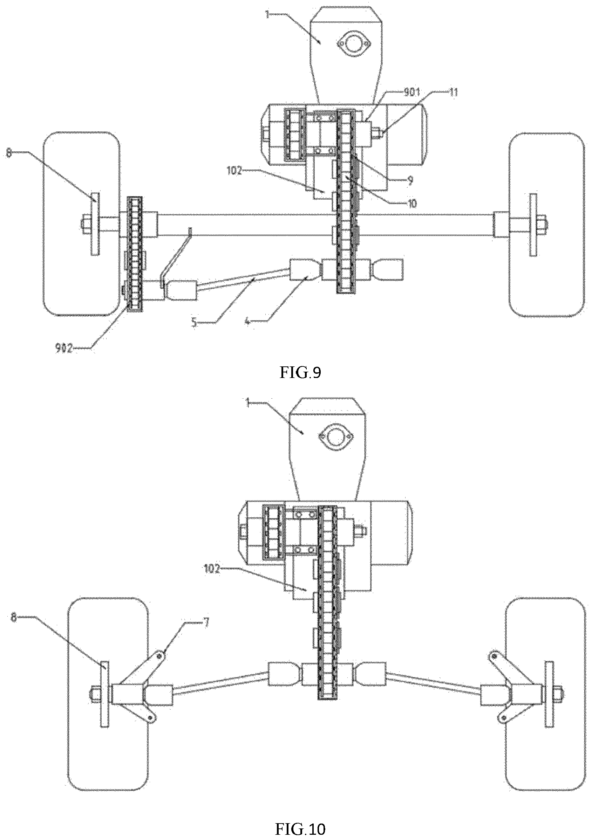

FIG. 9 is the structural diagram of the upright engine or the horizontal engine, the sprocket and chain transmission box body and the bridge sprocket and chain transmission box body applied to the non-independent suspension of the kart;
FIG. 10 is the structural diagram of the upright engine or the horizontal engine, the sprocket and chain transmission box body and the bridge sprocket and chain transmission box body applied to the independent suspension of the kart;
FIG. 11 is the left view of the overall structural of the upright engine or the horizontal engine, the sprocket and chain transmission box body and the bridge sprocket and chain transmission box body.

### DETAILED DESCRIPTION OF THE PREFERRED EMBODIMENTS

The technical scheme of the invention is further described clearly and detailedly hereinafter with reference to the drawings.

In the description of the invention, it is to be understood that the terms "center", "longitudinal", "lateral", "length", "width", "thickness", "upper", "lower", "front", "back", "left", "right", "vertical", "horizontal", "top", "bottom", "inside", "outside", "clockwise", "counterclockwise", and the like indicate orientation or positional relationships based on those shown in the accompanying drawings, solely for the purpose of facilitating the description of the invention and simplifying the description and are not intended to indicate or imply that the device or element referred to must have a particular orientation, be constructed and operated in a particular orientation, and therefore are not to be construed as limitations of the invention.

Furthermore, the terms "first" and "second" are used for descriptive purposes only and are not to be understood as indicating or implying relative importance or implicitly specifying the number of technical features indicated. Thus, a feature defined with the terms "first" and "second" may expressly or implicitly include one or more such features. In the description of the invention, "a plurality of' means two or more, unless otherwise expressly and specifically limited.

Embodiment 1, a transmission system, which is applied to a non-independent suspension or an independent suspension of a kart body.

The transmission system comprises a transmission box body and transmission wheel in the transmission box body; the transmission box body is a kind of the gear transmission box body, sprocket and chain transmission box body, bridge gear transmission box body or bridge sprocket and chain transmission box body or a combination; the transmission wheel is a transmission gear or a sprocket and chain.
Embodiment 2, a power transmission mechanism for all-terrain kart comprising said transmission system, characterized in that it further comprises an engine 1; said engine 1 is one kind of CVT engine or variable-frequency engine; said transmission system comprises a combination of gear transmission box body 2 and transmission gears 3 in said gear transmission box body 2;
A non-independent suspension applied to the kart body; said engine 1 is connected with the mounting bracket thereof via flexible spring rubber pad; The top bearing block 201 of said gear transmission box body 2 is arranged on the output shaft 101 of the engine tail end; in said top bearing block 201 of the gear transmission box body 2 is mounted with bearings and transmission gears sleeved to the output shaft spline of engine tail end sequentially, and fastened to the output shaft 101 of engine tail end with another set of bearings by means of nut; the central position of the said gear transmission box body 2 is provided with a plurality of groups of transmission gears sequentially arranged and meshing with each other, each group of transmission gears are fitted with two bearings, a gear and a gear shaft, two bearings of each combination are mounted in the bearing block on two sidewalls of the gear transmission box body 2, the gear shaft passes through the gears and the bearings and mounts the gears in the middle of two bearings, the gear shaft is fixed in the corresponding bearing holes; bearing, gear, and gear shaft are mounted in the bottom bearing block of the gear transmission box body 2; said gear shaft is a spline shaft of constant velocity joint 4, which passes through the bearing holes in the bearing block and combines the gear and the bearing to form a gear transmission combination, and the left and right constant velocity joint 4 heads are mounted on the spline shaft extending outward from the bottom bearing block of the gear transmission box body 2, which are fastened and connected by center screw;
In said constant velocity joint 4 head outputting power to the left at the bottom bearing block of the gear transmission box body 2 is provided with a constant velocity joint slideway at the right end of the transmission half-shaft 5, the constant velocity joint slideway of the left end of the transmission half-shaft 5 is embedded, and the constant velocity joint head extending from the right side of gear transmission box body 2 mounted at the left end of the drive axle tube 6 is embedded and connected; said gear transmission box 202 at the left of the drive axle tube 6 is vertically welded to the drive axle tube 6. In said constant velocity joint bearing block of the drive axle gear transmission box body are mounted with two bearings, a gear and a gear shaft; said transmission gear is installed in the middle of said two bearings, and the spline shaft of the constant velocity joint 4 passes through the bearing holes in the bearing block to combine the gear with the bearings, and is tightened by circlip in the overhang spline groove of the constant velocity joint bearing block of the gear transmission box body; in said drive axle gear transmission box body 202 is equipped with three sets of transmission gear combinations sequentially arranged and meshing with each other, including a set of gear combinations within the drive axle tube bearing block of the gear transmission box body on the hard drive shaft, an intermediate gear bearing combination within the drive axle tube welded gear transmission box body, and gear bearing combinations mounted within the constant velocity joint bearing block of the drive axle gear transmission box body;
An independent suspension applied to the kart body, using ram's horn structure suitable for independent suspensions; at the tail end of said transmission half-shaft 5 is provided with a retractable constant velocity joint spline shaft, inserted into the ring flange 8 center spline hole shared with the wheel hub brake discs mounted within the ram's horn 7 bearing block to engage and fastened by nut.

Embodiment 3, the power transmission mechanism for all-terrain kart comprising said transmission system, characterized in that it further comprises an engine 1; said engine 1 is one kind of CVT engine or variable-frequency engine; said transmission system comprises a combination of sprocket and chain transmission box body 9 and sprocket and chain 10 in said sprocket and chain transmission box body 9;
A non-independent suspension applied to the kart body, wherein the top bearing block 901 of said sprocket and chain transmission box body 9 is mounted on the output shaft 11 of said engine tail end; in the bridge gear transmission box body 12 is mounted with bearing, transmission minor sprocket sleeved to the output shaft spline of engine tail end sequentially, and fastened to the output shaft 11 of engine tail end with another set of bearings by means of nut; the central position of two bearings mounted in the top bearing block 901 of said sprocket and chain transmission box body 9 and on the transmission minor sprocket sleeved to the output shaft spline of engine tail end is provided with chains; the central position of two bearings mounted in the bottom bearing block of said sprocket and chain transmission box body 9 is in mesh connection with the minor sprocket sleeved with the constant velocity joint spline shaft; bearing sprocket and sprocket shaft are mounted in the bottom bearing block of said sprocket and chain transmission box body 9; said sprocket shaft is spline shaft of constant velocity joint, which passes through the bearing hole in the bearing block and combine the sprocket and bearing into the sprocket and chain transmission combination; two constant velocity joints 4 head at left and right are mounted on the overhang spline shaft of the bottom bearing block of the sprocket and chain transmission box 9 and are connect via central screw.

In said constant velocity joint 4 head outputting power to the left at the bottom bearing block of the sprocket and chain transmission box body is provided with a constant velocity joint slideway at the right end of the transmission half-shaft 5, the constant velocity joint slideway of the left end of the transmission half-shaft 5 is embedded, and the constant velocity joint 4 head extending from the right side of sprocket and chain transmission box body 9 mounted at the left end of the drive axle tube 6 is embedded and connected; said sprocket and chain transmission box 902 at the left of the drive axle tube 6 is vertically welded to the drive axle tube 6; in said constant velocity joint bearing block of the drive axle sprocket and chain transmission box body are mounted with two bearings, a minor sprocket and a sprocket shaft; said minor sprocket is installed in the middle of said two bearings, and the spline shaft of the constant velocity joint 4 passes through the bearing holes in the bearing block to combine the minor sprocket with the bearings, and is tightened by circlip in the overhang spline groove of the constant velocity joint bearing block of the sprocket and chain transmission box body;
An independent suspension applied to the kart body, wherein two constant velocity joints 4 are mounted at the left and right sides simultaneously out of the bottom bearing block of the sprocket and chain transmission box body 9 mounted vertically on the output shaft 11 of said engine tail end; the structure of two transmission half-shafts and two ram's horn 7 at left and right is identical with the ram's structure of suitable for independent suspension as mentioned in embodiment 1.

Embodiment 4, a power transmission mechanism for all-terrain kart comprising said transmission system applied to the non-independent suspension or independent suspension of the kart body, which is characterized in that it also includes engine 1; said engine is a kind of upright engine or horizontal engine; said transmission system is a combination of bridge gear transmission box body 12 and gear transmission box body 2;
The bridge gear transmission box body 12 mounted horizontally on the left output shaft of said engine 1 is closely stuck and fixedly mounted to the box body at the left of the engine 1 output shaft; a triangle support is connected between said bridge gear transmission box body 12 and the engine rear support 102; a top bearing block 201 of the input shaft of the gear transmission box body 2 is arranged on the right side of the output shaft bearing block 13 at the tail end of the bridge gear transmission box body 12 side by side; the same spline coaxially penetrates into the output shaft bearing block 13 at the tail end of the bridge gear transmission box body and the top bearing block 201 of the input shaft of the gear transmission box body 2 which are coaxial and side by side therewith; the bridge gear transmission box body 12 and the outward extending part of the bearing block of the gear transmission box body 2 are fastened through nuts;
Embodiment 5, a power transmission mechanism for all-terrain kart comprising said transmission system applied to the non-independent suspension or independent suspension of the kart body, which is characterized in that: it also includes an engine 1; said engine 1 is a kind of upright engine or horizontal engine; said transmission system is a combination of bridge sprocket and chain transmission box body 14 and sprocket and chain transmission box body 9;
Said power transmission mechanism formed by bridge sprocket and chain transmission box body 14 and sprocket and chain transmission box body 9 are identical with the power transmission mechanism of embodiment 4 in appearance shape, installation position structure and application range.

Wherein, in the bottom bearing block or the tail end bearing block of the gear transmission box or the sprocket and chain transmission box body driven by the ram's horn structure applied to the independent suspension, the middle spline shaft in the bearing block, which is connected with the constant velocity joint on the left side and the right side outside the bearing block, can be replaced by differential end gear or the sprocket to ensure that between two half shafts has differential function.

The gear transmission box or the sprocket and chain transmission box mounted on the right output shaft of the CVT engine or the variable-frequency engine and top bearing block of the gear transmission box body or the sprocket and chain transmission box body mounted coaxially and side by side with the right side out of the tail end output shaft bearing block of the bridge gear transmission box body or the bridge sprocket and chain transmission box body mounted horizontally on the left output shaft of the upright engine or horizontal engine can be centered around the input shaft thereof, and the working position of the transmission box body can be mounted to a vertical position, a horizontal position or any direction position for power transmission.

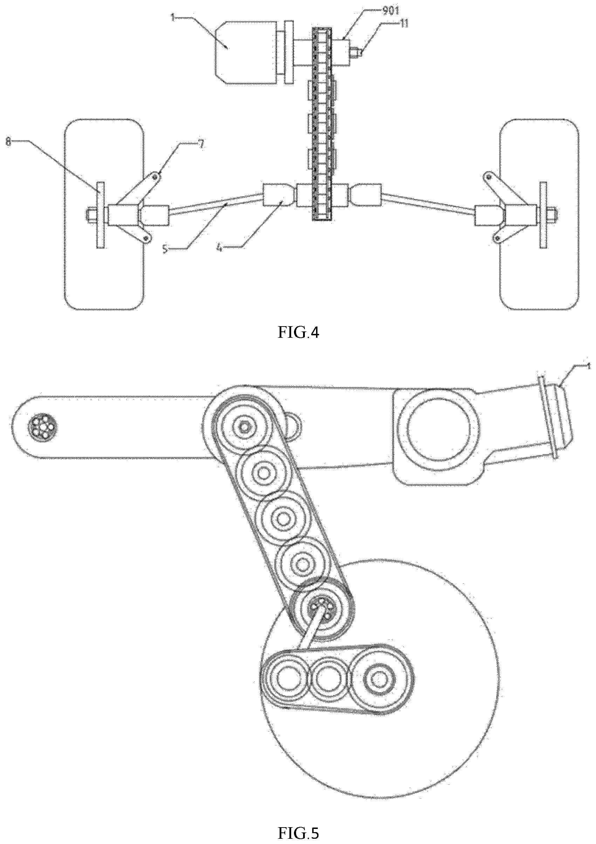

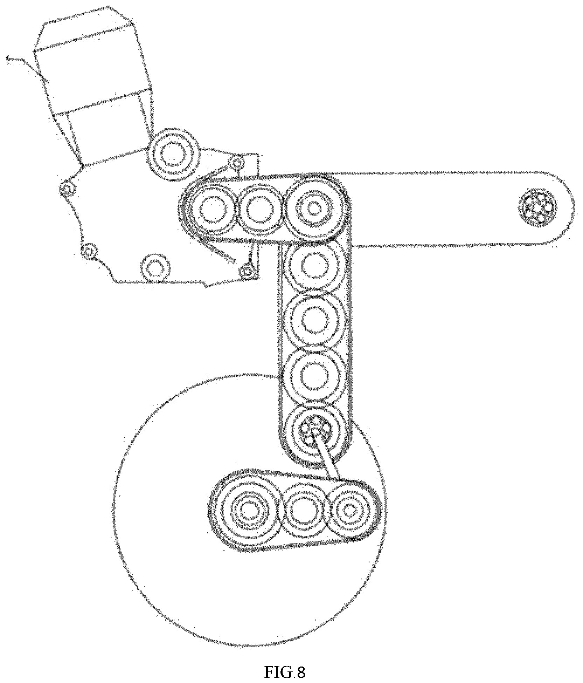

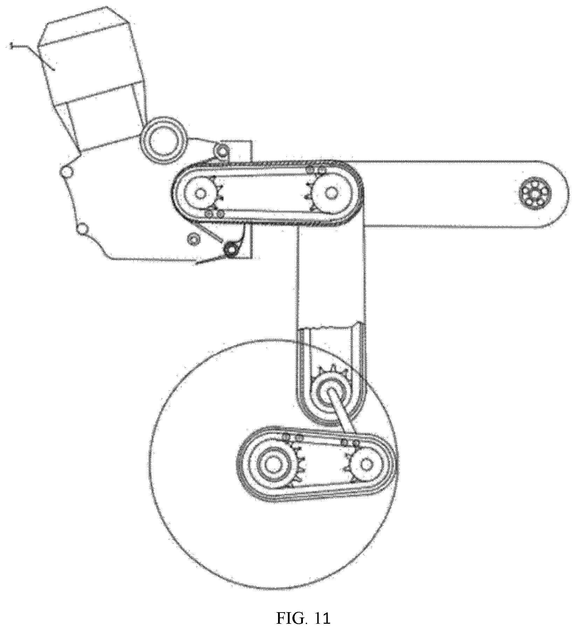

The working position of the gear transmission box and sprocket and chain are in a vertical position to transmit power, but in actual need the gear transmission box and sprocket transmission box can be mounted and arranged in a horizontal position to transmit power, using the horizontal position working diagrams in the attached FIG. 5, 8 and 11 as an example.

In the present invention, the power outputted from engine can be efficiently transmitted to a drive axle, so that a vehicle can better adapt to travel on an off-road surface, and the vehicle obtains a more stable driving force; in addition, the engine is mounted separate from the drive axle, and the engine is mounted on the frame, thereby reducing the unsprung mass of the drive axle and improving the comfort of the driver and passengers.

In the description of the invention, unless otherwise explicitly stated or limited, the terms "arranged", "mounted", "connected" and "fixed" should be interpreted broadly, and may be, for example, fixedly connected, detachably connected, or integrally connected; can be mechanically or electrically connected; they may be connected directly or indirectly through intervening media, or they may be interconnected between two elements. The specific meanings of the above terms in the invention can be understood by those skilled in the art according to specific situations.

In the invention, unless otherwise expressly provided and limited, the first feature is"over" or "under" the second feature may include direct contact of the first and second features, or may include contact of the first and second features not directly but by means of an additional feature between them. Furthermore, the first feature being "above", "on" and "on top of' the second feature includes the first feature being directly above and diagonally above the second feature, or simply indicating that the first feature is horizontally higher than the second feature. The first feature being "below", "under", and "underneath" the second feature includes the first feature being directly below and diagonally below the second feature, or simply means that the first feature is horizontally smaller than the second feature. the second feature.

In the description of the specification, reference is made to the terms "an embodiment", "some embodiments", "examples", "specific examples", or "some examples", etc. are described to mean that the specific features, structures, materials, or characteristics described in conjunction with the embodiment or example are included in at least one embodiment or example of the present invention. In this specification, schematic expressions of the above terms do not necessarily refer to the same embodiment or example. Moreover, the specific features, structures, materials, or characteristics described may be combined in any one or more embodiments or examples in a suitable manner.

The above is only the preferred embodiment of the invention, and is not intended to limit the invention, and any modifications, equivalent substitutions and improvements made within the spirit and principles of the invention shall be included in the scope of protection of the invention.

## Claims

1. A transmission system, which is applied to a non-independent suspension or an independent suspension of a kart body wherein the transmission system comprises a transmission box body and transmission wheel in the transmission box body; the transmission box body is a gear transmission box body, a sprocket and chain transmission box body, a bridge gear transmission box body or a bridge sprocket and chain transmission box body; the transmission wheel is a transmission gear or a sprocket and chain.

2. The power transmission mechanism for all-terrain kart comprising said transmission system **characterized in that** it further comprises an engine; said engine is one kind of CVT engine or variable-frequency engine; said transmission system comprises a combination of gear transmission box body and transmission gears in said gear transmission box body; a non-independent suspension applied to the kart body; said engine is connected with the mounting bracket thereof via flexible spring rubber pad; the top bearing block of said gear transmission box body is arranged on the output shaft of the engine tail end; in said top bearing block of the gear transmission box body is mounted with bearings and transmission gears sleeved to the output shaft spline of engine tail end sequentially, and fastened to the output shaft of engine tail end with another set of bearings by means of nut; the central position of the said gear transmission box body is provided with a plurality of groups of transmission gears sequentially arranged and meshing with each other, each group of transmission gears are fitted with two bearings, a gear and a gear shaft, two bearings of each combination are mounted in the bearing block on two sidewalls of the gear transmission box body, the gear shaft passes through the gears and the bearings and mounts the gears in the middle of two bearings, the gear shaft is fixed in the corresponding bearing holes; bearing, gear, and gear shaft are mounted in the bottom bearing block of the gear transmission box body; said gear shaft is a spline shaft of constant velocity joint, which passes through the bearing holes in the bearing block and combines the gear and the bearing to form a gear transmission combination, and the left and right constant velocity joint heads are mounted on the spline shaft extending outward from the bottom bearing block of the gear transmission box body, which are fastened and connected by center screw; in said constant velocity joint head outputting power to the left at the bottom bearing block of the gear transmission box body is provided with a constant velocity joint slideway at the right end of the transmission half-shaft, the constant velocity joint slideway of the left end of the transmission half-shaft is embedded, and the constant velocity joint head extending from the right side of gear transmission box body mounted at the left end of the drive axle tube is embedded and connected; said gear transmission box at the left of the drive axle tube is vertically welded to the drive axle tube, and the drive axle gear transmission box body is parallel with the ground; in said constant velocity joint bearing block of the drive axle gear transmission box body are mounted with two bearings, a gear and a gear shaft; said transmission gear is installed in the middle of said two bearings, and the spline shaft of the constant velocity joint passes through the bearing holes in the bearing block to combine the gear with the bearings, and is tightened by circlip in the overhang spline groove of the constant velocity joint bearing block of the drive axle gear transmission box body; in said drive axle gear transmission box body is equipped with three sets of transmission gear combinations sequentially arranged and meshing with each other, including a set of gear combinations within the drive axle tube bearing block of the gear transmission box body on the hard drive shaft, an intermediate gear bearing combination within the drive axle tube welded gear transmission box body, and gear bearing combinations mounted within the constant velocity joint bearing block of the drive axle gear transmission box body; an independent suspension applied to the kart body, using ram's horn structure suitable for independent suspensions; at the tail end of said transmission half-shaft is provided with a retractable constant velocity joint spline shaft, inserted into the ring flange center spline hole shared with the wheel hub brake discs mounted within the ram's horn bearing block to engage and fastened by nut.

3. The power transmission mechanism for all-terrain kart comprising said transmission system, **characterized in that** it further comprises an engine; said engine is one kind of CVT engine or variable-frequency engine; said transmission system comprises a combination of sprocket and chain transmission box body and sprocket and chain in said sprocket and chain transmission box body; a non-independent suspension applied to the kart body, wherein the top bearing block of said sprocket and chain transmission box body is mounted on the output shaft of said engine tail end; in the bridge gear transmission box body is mounted with bearing, transmission minor sprocket sleeved to the output shaft spline of engine tail end sequentially, and fastened to the output shaft of engine tail end with another set of bearings by means of nut; the central position of two bearings mounted in the top bearing block of said sprocket and chain transmission box body and on the transmission minor sprocket sleeved to the output shaft spline of engine tail end is provided with chains; the central position of two bearings mounted in the bottom bearing block of said sprocket and chain transmission box body is in mesh connection with the minor sprocket sleeved with the constant velocity joint spline shaft; bearing sprocket and sprocket shaft are mounted in the bottom bearing block of said sprocket and chain transmission box body; said sprocket shaft is spline shaft of constant velocity joint, which passes through the bearing hole in the bearing block and combine the sprocket and bearing into the sprocket and chain transmission combination; two constant velocity joints head at left and right are mounted on the overhang spline shaft of the bottom bearing block of the sprocket and chain transmission box and are connect via central screw; in said constant velocity joint head outputting power to the left at the bottom bearing block of the sprocket and chain transmission box body is provided with a constant velocity joint slideway at the right end of the transmission half-shaft, the constant velocity joint slideway of the left end of the transmission half-shaft extending left is embedded, and the constant velocity joint head extending from the right side of sprocket and chain transmission box body mounted at the left end of the drive axle tube is embedded and connected; said sprocket and chain transmission box at the left of the drive axle tube is vertically welded to the drive axle tube, and the drive axle sprocket and chain transmission box body is parallel with the ground; in said constant velocity joint bearing block of the drive axle sprocket and chain transmission box body are mounted with two bearings, a minor sprocket and a sprocket shaft; said minor sprocket is installed in the middle of said two bearings, and the spline shaft of the constant velocity joint passes through the bearing holes in the bearing block to combine the minor sprocket with the bearings, and is tightened by circlip in the overhang spline groove of the constant velocity joint bearing block of the sprocket and chain transmission box body; mounted two sets of sprocket combination are sleeved with suitable chains to form the power transmission mechanism inside said drive axle sprocket and chain transmission box body; an independent suspension applied to the kart body, wherein two constant velocity joints are mounted at the left and right sides simultaneously out of the bottom bearing block of the sprocket and chain transmission box body mounted vertically on the output shaft of said engine tail end; the structure of two transmission half-shafts and two ram's horn at left and right is identical with the ram's structure of the transmission system comprising said gear transmission box body and transmission gears inside said gear transmission box body suitable for independent suspension.

4. A power transmission mechanism for all-terrain kart comprising said transmission system applied to the non-independent suspension or independent suspension of the kart body, which is **characterized in that** it also includes engine; said engine is a kind of upright engine or horizontal engine; said transmission system is a combination of bridge gear transmission box body and gear transmission box body; the bridge gear transmission box body mounted horizontally on the left output shaft of said engine is closely stuck and fixedly mounted to the box body at the left of the engine output shaft; a triangle support is connected between said bridge gear transmission box body and the engine rear support; a top bearing block of the input shaft of the gear transmission box body is arranged on the right side of the output shaft bearing block at the tail end of the bridge gear transmission box body side by side; the same spline coaxially penetrates into the output shaft bearing block at the tail end of the bridge gear transmission box body and the top bearing block of the input shaft of the gear transmission box body which are coaxial and side by side therewith; the bridge gear transmission box body and the outward extending part of the bearing block of the gear transmission box body are fastened through nuts; three groups of mutually meshed gear bearing combinations are sequentially arranged in the bridge gear transmission box body, comprising the first group of transmission gears, the second group of transition gear bearing combination and the third group of tail end output gear bearing combination;

5. A power transmission mechanism for all-terrain kart comprising said transmission system applied to the non-independent suspension or independent suspension of the kart body, which is **characterized in that**: it also includes an engine; said engine is a kind of upright engine or horizontal engine; said transmission system is a combination of bridge sprocket and chain transmission box body and sprocket and chain transmission box body; said power transmission mechanism formed by bridge sprocket and chain transmission box body and sprocket and chain transmission box body are identical with the power transmission mechanism formed by said bridge gear transmission box body and the gear transmission box body in appearance shape, installation position structure and application range.

6. The power transmission mechanism for all-terrain kart comprising said transmission system of any claim from claim 1 to claim 5 wherein in the bottom bearing block or the tail end bearing block of the gear transmission box or the sprocket and chain transmission box body driven by the ram's horn structure applied to the independent suspension, the middle spline shaft in the bearing block, which is connected with the constant velocity joint on the left side and the right side outside the bearing block, can be replaced by differential end gear or the sprocket to ensure that between two half shafts has differential function.

7. The power transmission mechanism for all-terrain kart comprising said transmission system of any claim from claim 1 to claim 5 wherein the gear transmission box or the sprocket and chain transmission box mounted on the right output shaft of the CVT engine or the variable-frequency engine and top bearing block of the gear transmission box body or the sprocket and chain transmission box body mounted coaxially and side by side with the right side out of the tail end output shaft bearing block of the bridge gear transmission box body or the bridge sprocket and chain transmission box body mounted horizontally on the left output shaft of the upright engine or horizontal engine can be centered around the input shaft thereof, and the working position of the transmission box body can be mounted to a vertical position, a horizontal position or any direction position for power transmission.
